# EUROPÄISCHE PATENTANMELDUNG

(11) **EP 2 407 745 A1**
(43) Veröffentlichungstag der Anmeldung: **18.01.2012**
(21) Anmeldenummer: 11005699.1
(22) Anmeldetag: 13.07.2011
(51) Int. Cl.: F41G 7/22

(54) **Suchkopf für einen Flugkörper**

(30) Priorität: 15.07.2010 DE 102010027189
(71) Anmelder: LFK-Lenkflugkörpersysteme GmbH, 86529 Schrobenhausen (DE)
(72) Erfinder: Rüger, Roderich, 81827 München (DE); Zoz, Jürgen, Dr., 86316 Friedberg (DE)
(74) Vertreter: Avenhaus, Beate

(57) **Zusammenfassung**

Der erfindungsgemäße Suchkopf ist mit einem unempfindlichen und einem empfindlichen IR-Detektor ausgerüstet und detektiert rechtzeitig die von einem Flugziel stammende Tracker- oder Störstrahlung und löst Maßnahmen zum Schutz des empfindlichen Detektors aus.

## Beschreibung

Die Erfindung betrifft einen Suchkopf für einen Flugkörper mit wenigstens zwei Detektoren für bestimmte von einem Ziel abgestrahlte Spektralbereiche mit daran anschließender paralleler Signalverarbeitung, wobei die Detektoren geeignet sind Zielsignaturen und Störstrahlung zu empfangen.

Infrarot-Suchköpfe können durch Laser, die als DIRCM (Directed Energy Countermeasure) an einem fliegenden Ziel angebracht sind, gestört werden. dabei kann der Bildsensor des Suchkopfes auch irreversibel beschädigt werden. Eine Störung durch Laserstrahlung unterscheidet sich in ihrer Charakteristik signifikant von den bekannten Störverfahren wie beispielsweise Flares. Die Laserstrahlungsquelle ist ortsfest am fliegenden Ziel angebracht und der gebündelte Laserstrahl muss während der Gegenmaßnahme ständig mit hoher Genauigkeit auf den anfliegenden Flugkörper nachgeführt werden.

Das technische Problem bei der Realisierung einer gegen DIRCM gerichteten Maßnahme liegt darin, dass nacheinander drei verschiedene Dynamikbedingungen vorliegen. Zunächst verfolgt der Suchkopf mit hoher Strahlungsempfindlichkeit die thermische Signatur des fliegenden Ziels. Danach muss die wesentlich stärkere Strahlung des Track- und dann auch des Störlasers detektiert werden, wobei notwendigerweise die Empfindlichkeit stark reduziert sein sollte. Nach dem Abklingen der DIRCM- Effekte muss der

Suchkopf ohne Verzögerung wieder in der Lage sein, die thermische Zielsignatur zu verfolgen.

Aus der DE 195 31 435 C1 ist ein Verfahren zur Zielverfolgung bei Störmaßnahmen bekannt geworden, bei dem im Strahlengang des Infrarot-Zielsuchkopfes ein steuerbares Dämpfungsfilter angeordnet ist, welches auf eine wählbar hohe Durchgangsdämpfung einstellbar ist oder sich automatisch selbst einstellt. Es werden jedoch keine Angaben darüber gemacht, wie ein variabler Dämpfungsfilter und dessen Steuerung realisiert werden kann.

Es ist deshalb Aufgabe der Erfindung, eine Lösung dafür anzugeben, mit welchen Mitteln ein Dämpfungsfilter realisiert werden kann und wie dessen Steuerung funktionssicher erfolgen kann.

Die Aufgabe wird erfindungsgemäß dadurch gelöst, dass im Suchkopf für die thermische Zielsignatur ein erster Detektor mit hoher Empfindlichkeit angeordnet ist und dass im gleichen Strahlengang ein weiterer Detektor mit gegenüber dem ersten Detektor erheblich reduzierter Empfindlichkeit angeordnet ist, dessen Signalausgang mit einer Signalverarbeitung zur Detektion von Störstrahlung verbindbar ist, wobei im Fall des Auftretens von Störstrahlung mittels der Signalverarbeitung am ersten Detektor Maßnahmen zur Verringerung und/ oder Streuung der auf den ersten Detektor auftreffenden Störstrahlung aktivierbar sind.

Die Erfindung macht sich folgende Eigenschaften des am Flugziel montierten DIRCM-Senders (Diretcted Energy Countermeasure) zunutze. Die hochpräzise Nachführung des Laserstrahls ist nur unter Verwendung eines aktiven Laser-Trackers möglich. Dieser detektiert die vom Suchkopf zurück gestreute Strahlung eines Track-Lasers. Dieser Track-Laser muss eine bestimmte Zeit vor dem leistungsstärkeren Stör-Laser aktiviert werden, um die optische Achse des DIRCM-Systems auf den Suchkopf zu zentrieren. Die Lage der Laser auf dem Flugziel bietet die Möglichkeit, diese Lichtquellen selbst als Teil der Flugziel-Signatur zu betrachten und mit einem Suchkopf zu verfolgen.

Die den Detektor noch nicht gefährdende Tracker-Strahlung kann somit vom Suchkopf als DIRCM-Strahlung erkannt werden, so dass der Suchkopf Schutzmaßnahmen gegen den nachfolgenden Versuch der Zerstörung des Detektors auslösen kann. Hierbei wird die Tatsache genutzt, dass der weitere Detektor (4-Quadranten-Detektor) aufgrund des gepulsten Betriebs die Laserstrahlung erkennen kann, was bei einem IR-Array mit fester Bildfrequenz nicht möglich ist. Die erfinderische Lösung detektiert rechtzeitig die vom Flugziel stammende Tracker- oder Störstrahlung und löst Maßnahmen zum Schutz des ersten Detektors aus. Gleichzeitig kann der Flugkörper mittels des weiteren Detektors das durch die Laserstrahlung deutlich markierte Ziel weiter verfolgen. Nach dem Abschalten des Stör-Lasers kann wieder auf den empfindlicheren IR-Kanal umgeschaltet werden.

Eine vorteilhafte Ausgestaltung ist darin zu sehen, dass im ersten Detektor Mittel zur Defokussierung der Störstrahlung vorgesehen sind oder dass die Störstrahlung im Strahlengang zum ersten Detektor defokussierbar ist.

Neben der Defokussierung der einfallenden Störstrahlung ist es auch möglich, den Detektor aus einer Bildebene zu bewegen.

Eine weitere vorteilhafte Lösung des Problems besteht darin, dass im Strahlengang des ersten Detektors ein Dämpfungsfilter mit steuerbarer Durchgangsdämpfung angeordnet ist.

Ein Ausführungsbeispiel der Erfindung ist in der Zeichnung schematisch vereinfacht dargestellt und wird im Folgenden näher beschrieben. Es zeigen:
Fig. 1: einen Suchkopf mit zwei Detektoren, von denen einer hinsichtlich einfallender Störstrahlung schützbar ist,
Fig. 2: das Blockschaltbild des Suchkopfes aus Fig. 1.

Ein gegen DIRCM geschützter Suchkopf muss einen sehr großen Dynamikbereich hinsichtlich der zu detektierenden Signale abdecken. Die Probleme mit Suchköpfen mit nur einem Detektor gemäß dem Stand der Technik haben zu der Lösung mit zwei komplementären Sensor-Kanälen mit stark unterschiedlicher Sensorempfindlichkeit geführt.

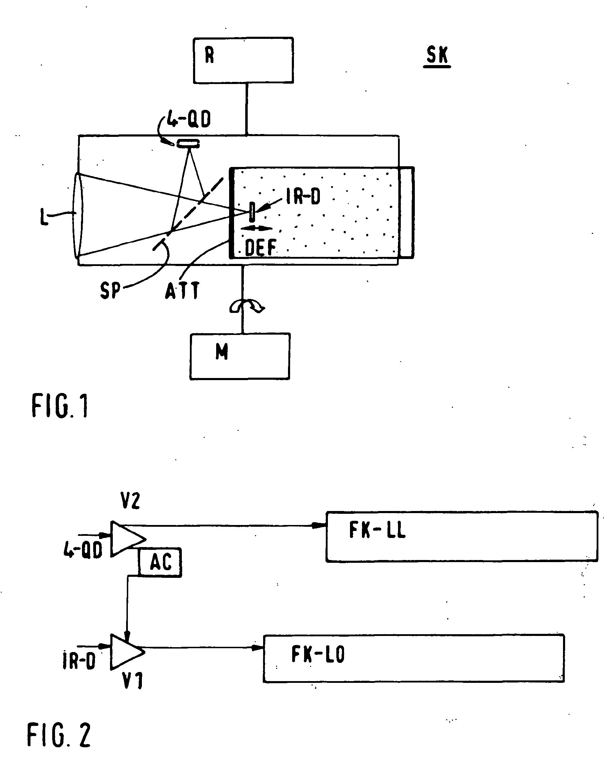

Ein derartiges Ausführungsbeispiel ist in der Figur 1 dargestellt. Dieser Suchkopf weist einen Kanal mit hoher Empfindlichkeit unter Verwendung eines Infrarot-Detektors IR-D auf, der für die Detektion und Verfolgung der thermischen Signatur eines Flugziels zuständig ist. Typischerweise wird hierfür ein Focal-Plane-Array-Detektor eingesetzt, der es ermöglicht, auch über große Entfernungen auf ein signaturschwaches Flugziel aufzuschalten.

Der zweite unempfindliche Kanal ist typischerweise mit einem 4-Quadrantendetektor 4-QD ausgestattet oder weist einen anderen unempfindlichen IR-Detektor auf. Dieser Detektor kann mittel seiner kontinuierlichen Messung die Intensität von Lasern oder auch Flares detektieren, da er nicht mit fester Integrationszeit und Bildfrequenz arbeitet. Da er auch Laserpulse sicher detektieren kann, vermag er Störeffekte wie Flares von Laserstrahlung zu unterscheiden.

Dieser zweite Detektor 4-QD reduziert nun im Fall einer gemessenen hohen Intensität der einfallenden Strahlung mit Hilfe einer weiteren Signalverarbeitung V2, AC die Empfindlichkeit des Bildsensor-Kanals. Diese Reduktion kann in einfachen Fall mittels eines Dämpfungsfilters ATT erfolgen, welches dem weiteren Detektor IR-D vorgeschaltet ist. Die Reduktion kann aber auch durch Defokussierung im IR-Kanal erfolgen. Hierfür gibt es mehrere Möglichkeiten der Realisierung, wie beispielsweise mittels Bewegung DEF des Bildsensors IR-D aus der Bildebene. Die Einbringung von defokussierenden Elementen in den Strahlengang ist ebenso gut möglich. In jedem Fall ist dann der Bildsensor vor Beschädigung durch die Strahlung eines am Flugziel angebrachten Stör-/ Zerstör-Lasers geschützt.

Wenn der Stör-Laser abgeschaltet ist, kann der empfindliche IR-Kanal wieder zur Verfolgung der relativ schwachen thermischen Zielsignatur genutzt werden. Während der Bestrahlung durch einen derartigen Laser schaltet der unempfindliche 4-Quadranten-Kanal 4-QD auf den Laser auf und steuert den Flugkörper zum Flugziel. Dies ist in der Figur 2 dargestellt. Die Ansteuerung der Dämpfung bzw. Defokussierung AC erfolgt über die weitere Signalverarbeitung (V2), in der anhand der Signalstärke, die der zweite Detektor 4 QD empfängt, entschieden wird, wie intensiv die gewählte Maßnahme eingesetzt wird. Diese Maßnahme wirkt dann unverzüglich auf den ersten Detektor IR-D und schützt ihn bei intensiver Stör-Strahlung.

Weiterhin ist aus der Figur 2 zu erkennen, dass die Ausgangssignale der ersten V1 und der weiteren V2 Signalverarbeitung jeweils für die Lenkung des Flugkörpers verwendet werden, je nachdem, ob keine Störung durch Laser vorliegt FK-LO oder ob eine intensive Störung durch Laser vorliegt FK-LL. In jedem Fall ist eine präzise Nachführung auf das erfasste Flugziel gewährleistet.

In Figur 1 ist ein Suchkopf schematisch vereinfacht dargestellt. Entscheidend ist hier die Nutzung zweier Sensor-Kanäle mit stark unterschiedlicher Empfindlichkeit, wobei die Intensität der auf den empfindlicheren ersten Detektor IR-D auftreffenden Strahlung gemäß der hier beschriebenen Lösung gemindert wird. Die Empfindlichkeit dieses Kanals kann auch dadurch gemindert werden, dass der Strahlteiler SP gekippt wird, wodurch sich sowohl der durchgelassene als auch der gespiegelte Anteil der Strahlung modulieren lässt.

## Patentansprüche

1. Suchkopf (SK) für einen Flugkörper mit wenigstens zwei Detektoren (4-QD, IR-D)für bestimmte von einem Ziel abgestrahlte Spektralbereiche mit daran anschließender paralleler Signalverarbeitung (V1, V2), wobei die Detektoren geeignet sind Zielsignaturen und Störstrahlung zu empfangen, **dadurch gekennzeichnet,**
- **dass** im Suchkopf (SK) für die thermische Zielsignatur ein erster Detektor (IR-D) mit hoher Empfindlichkeit angeordnet ist,
- **dass** im gleichen Strahlengang ein weiterer Detektor (4-QD) mit gegenüber dem ersten Detektor (IR-D) erheblich reduzierter Empfindlichkeit angeordnet ist, dessen Signalausgang mit einer weiteren Signalverarbeitung (V2) zur Detektion von Störstrahlung verbindbar ist, wobei im Fall des Auftretens von Störstrahlung mittels der weiteren Signalverarbeitung (V2) am ersten Detektor (IR-D) Maßnahmen (AC) zur Verringerung (ATT) und/ oder Streuung (DEF) der auf den ersten Detektor (IR-D) auftreffenden Störstrahlung aktivierbar sind.

2. Suchkopf nach Anspruch 1, **dadurch gekennzeichnet, dass** im ersten Detektor Mittel zur Defokussierung der Störstrahlung vorgesehen sind.

3. Suchkopf nach Anspruch 1, **dadurch gekennzeichnet, dass** die Störstrahlung im Strahlengang zum ersten Detektor defokussierbar ist.

4. Suchkopf nach Anspruch 1, **dadurch gekennzeichnet, dass** der Detektor aus einer Bildebene bewegbar ist.

5. Suchkopf nach Anspruch 1, **dadurch gekennzeichnet, dass** im Strahlengang des ersten Detektors ein Dämpfungsfilter mit steuerbarer Durchgangsdämpfung angeordnet ist.
